(19)

**Europäisches Patentamt**
**European Patent Office**
**Office européen des brevets**

(11) **EP 4 462 663 A1**

(12) **EUROPEAN PATENT APPLICATION**

(43) Date of publication:
**13.11.2024   Bulletin 2024/46**

(21) Application number: **23172393.3**

(22) Date of filing: **09.05.2023**

(51) International Patent Classification (IPC):
**H02M 1/42** *(2007.01)*

(52) Cooperative Patent Classification (CPC):
**H02M 1/4216; H02M 1/0058; H02M 1/4233; H02M 1/4241; H02M 1/425**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Infineon Technologies Austria AG**
**9500 Villach (AT)**

(72) Inventors:
• **LEONG, Kennith Kin**
**9500 Villach (AT)**

• **DEBOY, Gerald Josef**
**9061 Klagenfurt (AT)**
• **KASPER, Matthias Joachim**
**9500 Villach (AT)**
• **PACINI, Alex**
**9500 Villach (AT)**

(74) Representative: **Westphal, Mussgnug & Partner, Patentanwälte mbB**
**Werinherstraße 79**
**81541 München (DE)**

(54) **POWER CONVERTER AND POWER CONVERSION METHOD**

(57)    A power converter and a power conversion method are disclosed. The power converter includes a plurality of resonant converter stages (1a, 1b, 1c) each Including an input (Ina, Inb, Inc) and an output (Outa, Outb, Outc); a rectifier circuit (6); and a control circuit (7) configured to control operation of the plurality of resonant converter stages (1a, 1b, 1c). The input (Ina, Inb, Inc) of each of the plurality of converter stages (1a, 1b, 1c) is configured to receive a respective input voltage (Vina, Vinb, Vine), and the outputs (Outa, Outb, Outc) of the plurality of resonant converter stages (1a, 1b, 1c) are connected in series. The rectifier circuit (6) is connected to the outputs (Outa, Outb, Outc) of the plurality of converter stages (1a, 1b, 1c) and is configured to provide an output signal (Vout, lout) based on converter stage output voltages (Vseca, Vsecb, Vsecc) provided at the outputs (Outa, Outb, Outc) of the resonant converter stages (1a, 1b, 1c).

FIG 1

EP 4 462 663 A1

**Description**

This disclosure relates in general to a power converter and a method and a control circuit for operating a power converter, in particular a three-phase PFC (Power Factor Correction) converter.

Three-phase PFC converters, which may also be referred to as PFC rectifiers, are widely used in various kinds of power conversion applications. Examples of such applications include, on-board chargers (OBC) that are configured to charge a battery of a vehicle, or power supplies for lighting, telecommunication, or computer server applications. A three-phase PFC rectifier is configured to generate a rectified output voltage based on three alternating input voltages each received at a respective input. Furthermore, in order to control a power factor, a three-phase PFC rectifier is configured to control current waveforms of input currents received at the inputs such that, for example, the input currents have the same waveform as the input voltages.

The input voltages received at the inputs are grid voltages received from a power grid, for example. In many cases it is desirable to provide a galvanic isolation between the inputs where the alternating input voltages received and an output where the rectified output voltage is provided. A conventional three-phase PFC rectifier providing galvanic isolation between the input and the output may include two stages, a first stage configured to generate a rectified voltage (often referred to as a DC link voltage) based on the alternating input voltages, and a second stage configured to generate an output voltage based on the DC link voltage and to provide for a galvanic isolation between the first stage and the output. In this conventional three-phase PFC rectifier, the first stage usually includes three inductors and a DC link capacitor, and the second stage usually includes a transformer, an output capacitor and, optionally, an inductor in addition to the transformer. The inductors and the DC link capacitor are bulky and heavy and may take up to 50 % of an overall size of the PFC rectifier.

The number of inductors can be reduced and the DC link capacitor can be omitted when the three-phase PFC rectifier is implemented as a three-phase dual active bridge (DAB) converter. This type of PFC rectifier, however, is difficult to control.

There is a need for an improved three-phase PFC converter with a reduced number of electronic components.

One example relates to a power converter. The power converter includes a plurality of resonant converter stages each including an input and an output, a rectifier circuit, and a control circuit configured to control operation of the plurality of resonant converter stages. The input of each of the plurality of converter stages is configured to receive a respective input voltage. The outputs of the plurality of resonant converter stages are connected in series. The rectifier circuit is connected to a series circuit including the outputs of the plurality of converter stages and is configured to provide an output signal based on converter stage output voltages provided at the outputs of the resonant converter stages.

Another example relates to a power conversion method using a power converter. The power converter includes a plurality of resonant converter stages each including an input and an output, wherein the input of each of the plurality of resonant converter stages is configured to receive a respective input voltage and wherein the outputs of the plurality of resonant converter stages are connected in series, and a rectifier circuit connected to a series circuit including the outputs of the plurality of resonant converter stages. The method includes adjusting an operating frequency of operating the resonant converter stages, operating each of the plurality of resonant converter stages in a plurality of successive operating cycles at the same adjusted operating frequency, and individually adjusting a power transfer duty cycle of each of the plurality of resonant converter stages, wherein the power transfer duty cycle of each of the plurality of resonant converter stages is a portion of each operating cycle of the respective converter stage in which power is received by the respective converter stage from the respective input.

Examples are explained below with reference to the drawings. The drawings serve to illustrate certain principles, so that only aspects necessary for understanding these principles are illustrated. The drawings are not to scale. In the drawings the same reference characters denote like features.

Figure 1 illustrates one example of a power converter that includes a plurality of resonant converter stages, a rectifier circuit, and a control circuit;

Figure 2 illustrates signal waveforms of input voltages that may be received by the resonant converter stages;

Figure 3 illustrates one example of a power supply system configured to provide several input voltages;

Figure 4 illustrates another example of a power supply system;

Figure 5 illustrates one example of a method for operating a power converter of the type illustrated in Figure 1;

Figure 6 shows signal waveforms that illustrate one example of a method according to Figure 5;

Figure 7 illustrates a power converter of the type illustrated in Figure 1, wherein the resonant converter stages are illustrated in greater detail;

Figure 8 shows signal waveforms of resonant voltages generated by switching circuits in the resonant converter stages according to Figure 7;

Figure 9 shows signal waveforms of further voltages and currents occurring in the resonant converter stages according to Figure 7;

Figure 10 illustrates one example of a switching circuit;

Figures 11 and 12 illustrate different examples of a bidirectionally blocking electronic switch that may be used in the switching circuit;

Figures 13 illustrates one example of a resonant circuit that may be used in each of the resonant converter stages;

Figures 14-18 illustrate different examples of the rectifier circuit;

Figures 19 illustrates one example of the control circuit;

Figures 20-22 illustrate different examples of an output signal controller of the control circuit according to Figure 19;

Figure 23 illustrates a gain of one resonant converter stage dependent on an operating frequency;

Figure 24 shows signal waveforms of input voltages, input currents, output voltage and power transfer durations of the resonant converter stages at different output powers;

Figure 25 illustrates a power converter of the type illustrated in Figure 1 when operated in a single-phase mode;

Figure 26 shows signal diagrams that illustrate operation of the power converter the power converter according to Figure 25 in the single-phase mode; and

Figure 27 illustrates one example of a control circuit configured to control operation of the power converter according to Figure 25 in the single phase mode.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

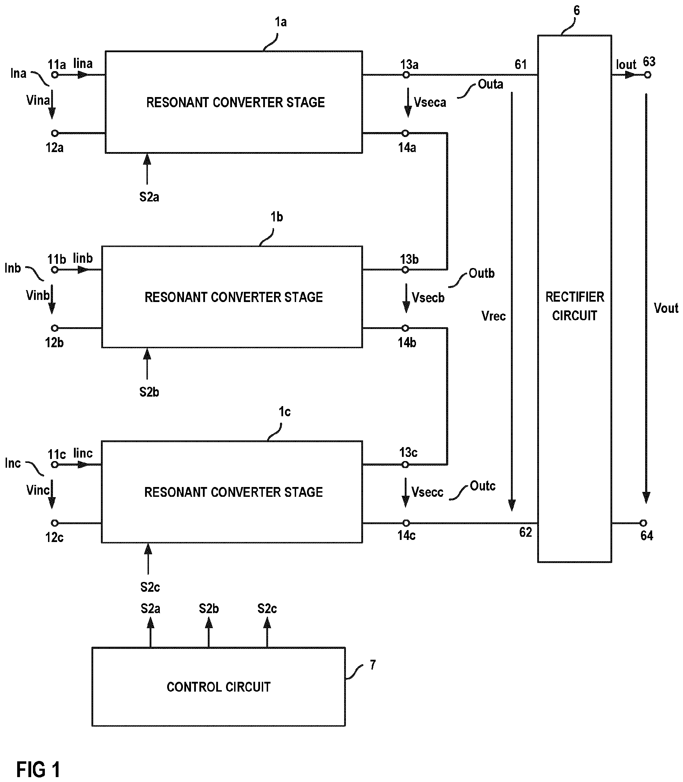

Figure 1 illustrates one example of a power converter. The power converter includes a plurality of resonant converter stages 1a, 1b, 1c, and a rectifier circuit 6. In the following, the resonant converter stages 1b, 1b, 1c are briefly referred to as converter stages, and the rectifier circuit 6 is briefly referred to as rectifier.

Just for the purpose of illustration, the power converter according to Figure 1 includes three converter stages 1a, 1b, 1c. This, however, is only an example. The power converter is not restricted to include only three converter stages 1a, 1b, 1c but may include more than three converter stages as well. Equivalently, the method of operating the power converter explained herein below is not restricted to operating a power converter with only three converter stages but may also be used to operate a power converter with more than three converter stages.

Each of the converter stages 1a, 1b, 1c includes an input Ina, Inb, Inc and output Outa, Outb, Outc. Referring to Figure 1, the inputs Ina, Inb, Inc of the converter stages 1a, 1b, 1c are connected in parallel. This includes that each of the converter stages 1a, 1b, 1c is configured to receive a respective input voltage Vina, Vinb, Vinc at its input Ina, Inb, Inc. According to one example, the input Ina, Inb, Inc of each of the converter stages 1a, 1b, 1c includes a first input node 11a, 11b, 11c and a second input node 12a, 12b, 12c, wherein the input voltage Vina, Vinb, Vinc is a voltage received between the first and second input nodes 11a, 11b, 11c, 12a, 12b, 12c.

Furthermore, referring to Figure 1, the outputs Outa, Outb, Outc of the converter stages 1a, 1b, 1c are connected in series, wherein a series circuit including the outputs Outa, Outb, Outc of the converter stages 1a, 1b, 1c is connected to the rectifier circuit 6. Each of the converter stages 1a, 1b, 1c is configured to provide a respective output voltage Vseca, Vsecb, Vsecc at its output Outa, Outb, Outc. According to one example the output Outa, Outb, Outc of each of the converter stages 1a, 1b, 1c comprises a first output node 13a, 13b, 13c and a second output node 14a, 14b, 14c and the output voltage Vseca, Vsecb, Vsecc is a voltage provided between the first and second output node 13a, 13b, 13c, 14a, 14b, 14c. Due to the series connection of the converter stage outputs Outa, Outb, Outc a rectifier input voltage Vrec, which is a voltage received at an input 61, 62 of the rectifier circuit 6 from the converter stages 1a, 1b, 1c, equals a sum of the output voltages Vseca, Vsecb, Vsecc provided by the converter stages 1a, 1b, 1c.

As explained in detail herein further below, the rectifier input voltage Vrec is an alternating voltage. The rectifier 6 is configured to generate a direct output voltage Vout based on the alternating rectifier input voltage Vrec.

Referring to Figure 1, the power converter further includes a control circuit 7 that is configured to control operation of the power converter. More specifically, the control circuit 7 is configured to control operation of the converter stages 1a, 1b, 1c of the power converter by generating respective control signals received by the converter stages 1a, 1b, 1c. In Figure 1, reference characters S2a, S2b, S2c each represent one or more control signals received by each of the converter stages 1a, 1b, 1c from the control circuit 7.

According to one example, the power converter is configured to operate in a PFC (power factor correction) mode and, therefore, may also be referred to as PFC rectifier. Operating the power converter in the PFC mode includes regulating the output voltage Vout and includes regulating the waveforms of input currents Iina, Iinb, Iinc received by the converter stages 1a, 1b, 1c dependent on the respective input voltage Vina, Vinb, Vine in order to control the power converter. More specifically, the waveforms of the input currents Iina, Iinb, Iinc are regulated to have the same waveform as the input voltages Vina, Vinb, Vinc. The input currents Iina, Iinb, Iinc can be regulated such that the waveform of each of the input currents Iina, Iinb, Iinc is in phase with the respective input voltage Vina, Vinb, Vine, or such that there is a phase shift between the input current Iina, Iinb, Iinc and the respective input voltage Vina, Vinb, Vinc.

As explained below, the converter stages 1a, 1b, 1c operate in a switched mode. This includes that the input currents Iina, Iinb, Iinc received by the converter stages 1a, 1b, 1c may include current ripples. However, unless specifically stated otherwise, input current Iina, Iinb, Iinc as used herein denotes an average input current. In this context, an "average input current" is an input current averaged over one or more operating cycles of the converter stages 1a, 1b, 1c. Such operating cycles are explained in detail herein further below.

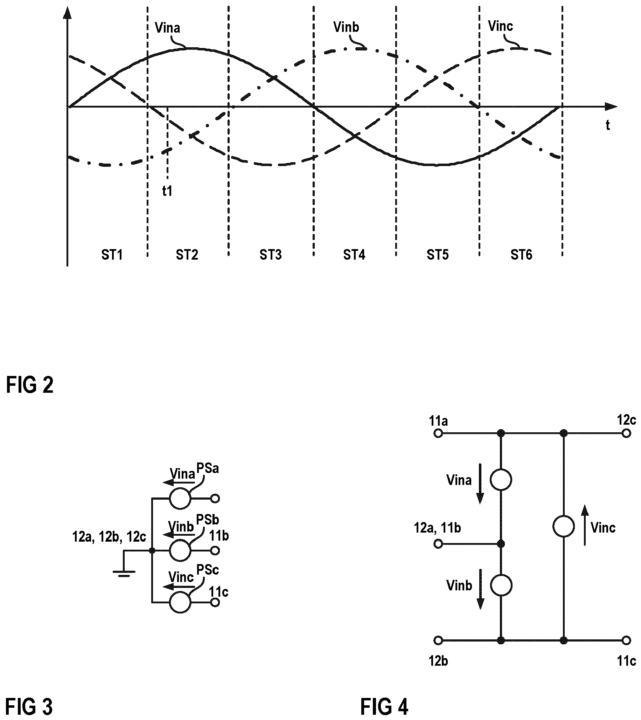

According to one example illustrated in Figure 2, the input voltages Vina, Vinb, Vinc received by the converter stages 1a, 1b, 1c are sinusoidal input voltages that have the same frequency and RMS (root mean square) value. The frequency is 50 Hz or 60 Hz, for example. The RMS value is selected from between 100 $V_{RMS}$ and 300 $V_{RMS}$, for example. According to one example, the RMS value is 110 $V_{RMS}$ or 230 $V_{RMS}$. Figure 2 illustrates one period of each of the input voltages. In this example, a phase shift between each pair of the input voltages Vina, Vinb, Vinc is 120° ($2\pi/3$).

The input voltages are voltages received from a power grid, for example. The power grid may be implemented with a star configuration illustrated in Figure 3, wherein PSa, PSb, PSc denote power sources of the power grid. In this example, each of the input voltages is provided such that the input voltages Vina, Vinb, Vinc are referenced to the same reference node.

According to another example illustrated in Figure 4, the power grid is implemented with a delta configuration. In this example, the input voltages Vina, Vinb, Vinc are referenced to different reference nodes.

If, for example, the power converter receives sinusoidal input voltages Vina, Vinb, Vinc of the type illustrated in Figure 2, operating the power converter in the PFC mode includes regulating the waveforms of the (average) input currents Iina, Iinb, Iinc such that the waveforms have sinusoidal waveforms corresponding to the waveforms of the input voltages. That is, the input currents Iina, Iinb, Iinc are regulated such that the waveform of the input current Iina, Iinb, Iinc received by each of the converter stages 1a, 1b, 1c at least approximately equals the waveform of the input voltage Vina, Vinb, Vinc received by the respective converter stage 1a, 1b, 1c.

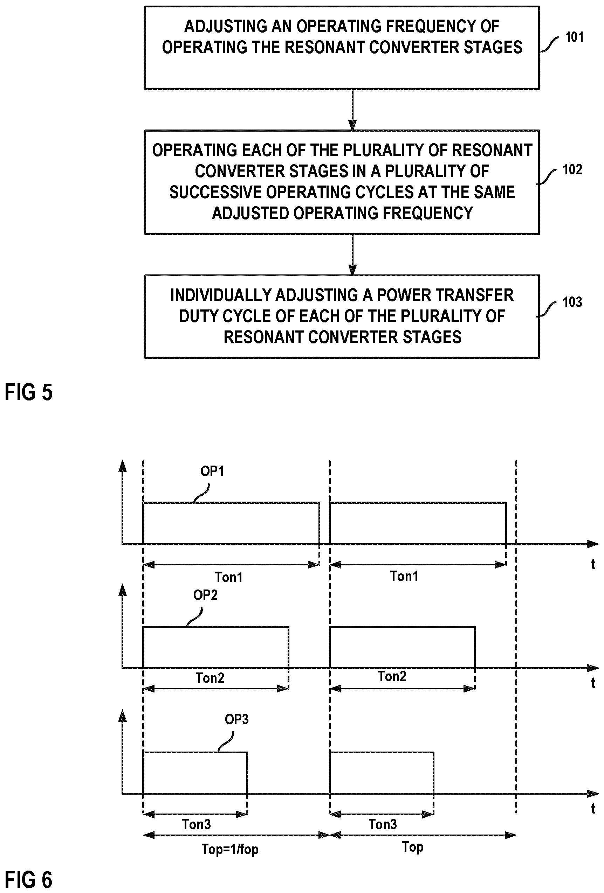

Figure 5 illustrates one example of a method for operating a power converter of the type illustrated in Figure 1. Referring to Figure 1, the method includes adjusting an operating frequency of operating the resonant converter stages 1a, 1b, 1c (101). Furthermore, the method includes operating each of the plurality of resonant converter stages 1a, 1b, 1c in a plurality of successive operating cycles at the same adjusted operating frequency (102). Moreover, the method includes individually adjusting a power transfer duty cycle of each of the plurality of resonant converter stages 1a, 1b, 1c (103), wherein, in each operating cycle of a resonant converter stage 1a, 1b, 1c, the power transfer duty cycle is a portion of the operating cycle in which power is received from the input by the respective resonant converter stage 1a, 1b, 1c.

Figure 6 shows signal diagrams that illustrate operating the power converter in accordance with the method according to Figure 5. As explained herein below, the power transfer duty cycles of the converter stages 1a, 1b, 1c may vary over one period of the input voltages Vina, Vinb, Vinc. Thus, for example, the power converter stage having the highest power transfer duty cycle of the power converter stages 1a, 1b, 1c may be different at different times of one period of the input voltages. In Figure 6, signal waveform OP1 illustrates several (two) operating cycles of a first one of the three converter stages 1a, 1b, 1c, signal waveform OP2 illustrates several operating cycles of a second one of the three converter stages 1a, 1b, 1c, wherein the second converter stage is different from the first converter stage, and signal waveform OP3 illustrates operating cycles of a third one of the converter stages 1a, 1b, 1c, wherein the third converter stage is different from the first and second converter stages. Referring to Figure 6, in each of the converter stages, the operating cycles have the same operating cycle duration Top. A reciprocal 1/Top of the operating cycle duration Top is the operating frequency fop,

$$fop = \frac{1}{Top} \qquad (1),$$

so that the three converter stages have the same operating frequency. Furthermore, in Figure 6, Ton1 denotes a power transfer duration of the first converter stage in the operating cycles illustrated in Figure 6, Ton2 denotes a power transfer duration of the second converter stage, and Ton3 denotes a power transfer duration of the said converter stage in each operating cycle. A power transfer duty cycle d1 of the first converter stage is given by the power transfer duration Ton1 divided by the operating cycle duration Top,

$$d1 = \frac{Ton1}{Top} \qquad (2a).$$

Equivalently, power transfer duty cycles d1, d2 of the first and second converter stages are given by

$$d2 = \frac{Ton2}{Top} \qquad (2b),$$

$$d3 = \frac{Ton3}{Top} \qquad (2c),$$

where Ton2 and Ton3 denote the respective power transfer durations.

As explained below, the operating frequency fop can be adjusted. In each case, however, the operating frequency is much higher than the frequency of the input voltages Vina, Vinb, Vine, so that each of the input voltages can be considered to be essentially constant over several successive operating cycles. According to one example, the operating frequency fop is at least 500 times, at least 1000 (=1e3) times or at least 10000 (=1e4) times the frequency of the input voltages Vina, Vinb, Vinc. According to one example, the operating frequency fop is higher than 10 kHz, higher than 100 kHz, or even higher than 500 kHz. As explained above, the frequency of the input voltages Vina, Vinb, Vinc is 50 Hz or 60 Hz, for example.

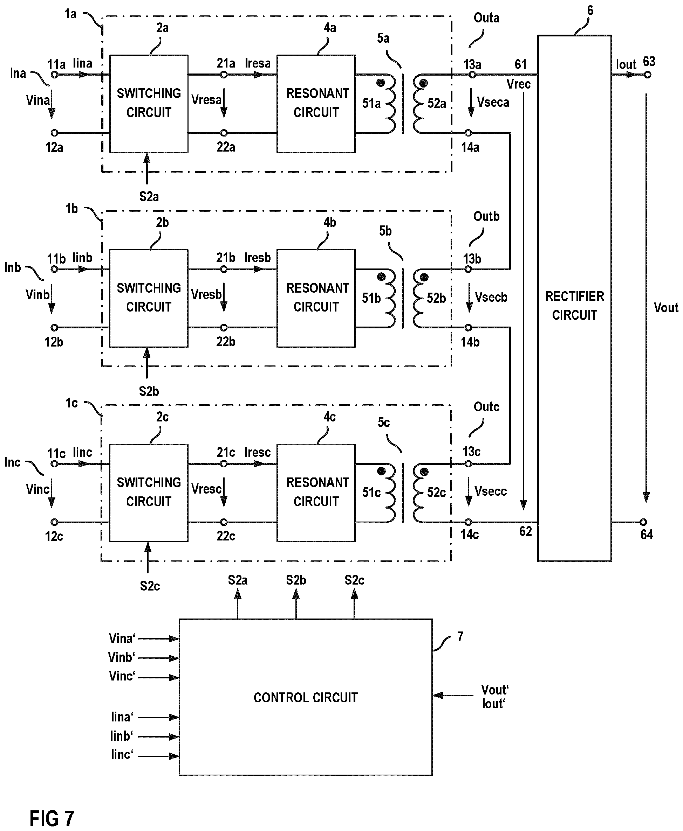

By suitably adjusting the operating frequency fop of the resonant converter stages 1a, 1b, 1c, that each receive a respective input voltage Vina, Vinb, Vinc and that have their outputs Outa, Outb, Outc connected in series, and by suitably adjusting the power transfer duty cycles d1, d2, d3 the voltage level of the output voltage Vout and the current waveforms of the input currents Iina, Iinb, Iinc can be regulated. This is explained herein below with reference to a more detailed example of the power converter illustrated in Figure 7.

Referring to Figure 7, each of the converter stages 1a, 1b, 1c includes a switching circuit 2a, 2b, 2c connected to the input Ina, Inb, Inc and configured to receive the input voltage Vina, Vinb, Vinc and the input current Iina, Iinb, Iinc; a resonant circuit 4a, 4b, 4c connected to the switching circuit 2a, 2b, 2c; and a transformer 5b, 5b, 5c. The transformer 5b, 5b, 5c includes a primary winding 51a, 51b, 51c connected to the resonant circuit 4a, 4b, 4c and a secondary winding 52a, 52b, 52c inductively coupled with the primary winding 51a, 51b, 51c. The output voltage Vseca, Vsecb, Vsecc of each of the converter stages 1a, 1b, 1c is a voltage across the secondary winding 52a, 52b, 52c of the respective transformer 5b, 5b, 5c. As can be seen from Figure 7, connecting the outputs Outa, Outb, Outc of the converter stages 1a, 1b, 1c in series includes connecting the secondary windings 52a, 52b, 52c of the transformers 5b, 5b, 5c in series between the input 61, 62 of the rectifier 6.

According to one example, the transformers 5a, 5b, 5c have the same winding ratio 1:n. Furthermore, the primary windings 51a, 51b, 51c and the secondary windings 52a, 52b, 52c may have the same winding sense.

Each of the switching circuits 2a, 2b, 2c is configured to generate an alternating voltage Vresa, Vresb, Vresc based on the received input voltage Vina, Vinb, Vine. In each of the resonant converter stages 1a, 1b, 1c, the respective alternating voltage Vresa, Vresb, Vresc is received by the resonant circuit 4a, 4b, 4c. For this, an output of the switching circuit 2a, 2b, 2c is connected to an input of the resonant circuit 4a, 4b, 4c at circuit nodes 21a, 22a, 21b, 22b, 21c, 22c.

In the power converter according to Figure 7, operating the converter stages 1a, 1b, 1c in the plurality of successive operating cycles at the operating frequency fop includes operating the switching circuits 2a, 2b, 2c in the plurality of successive operating cycles at the operating frequency fop in order to generate the alternating voltages Vresa, Vresb, Vresc.

As illustrated in Figure 7, providing the alternating voltages Vresa, Vresb, Vresc to the resonant circuits 4a, 4b, 4c is associated with a resonant current through the resonant circuit 4a, 4b, 4c. Due to the inductive coupling between the primary winding 51a, 51b, 51c and the secondary winding 52a, 52b, 52c of each of the transformers 5a, 5b, 5c and due to the series connection of the secondary windings 52a, 52b, 52c the resonant currents Iresa, Iresb, Iresc in the converter stages 1a, 1b, 1c are essentially the same. In each operating cycle, during the power transfer duration, the switching circuit 2a, 2b, 2c connects the resonant circuit 4a, 4b, 4c to the input Ina, Inb, Inc, so that during the power transfer duration the input current Ina, Inb, Inc equals the resonant current Iresa, Iresb, Iresc. During the remainder of the operating cycle the resonant circuit 4a, 4b, 4c is disconnected from the input Ina, Inb, Inc and the switching circuit 2a, 2b, 2c provides for a freewheeling of the resonant current Iresa, Iresb, Iresc. By suitably adjusting the operating frequency and suitably adjusting power transfer duty cycles da, db, dc of the switching circuits 2a, 2b, 2c the output voltage Vout as well as signal waveforms of the input currents Iina, Iinb, Iinc can be adjusted. The power transfer duty cycle da, db, dc of each switching circuit 2a, 2b, 2c, in accordance with equations (2a), (2b), (2c) is given by the power transfer duration Tona. Tonb, Tonc of the respective switching circuit 2a, 2b, 2c divided by the operating cycle duration Top.

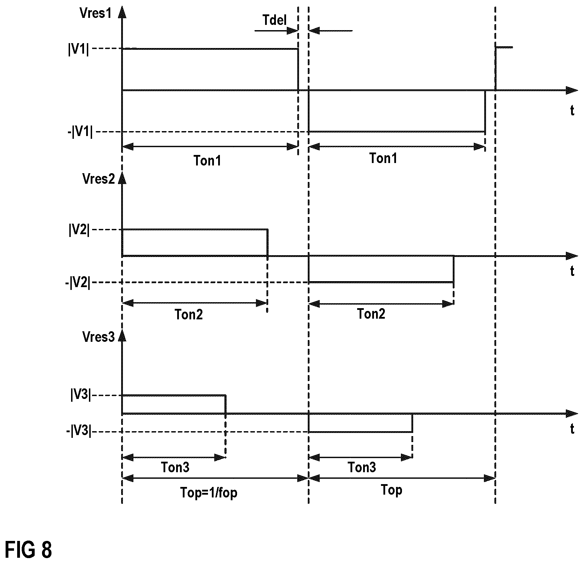

Figure 8 illustrates one example of a method for generating the alternating voltages Vresa, Vresb, Vresc by the switching circuits 2a, 2b, 2c. More specifically, Figure 8 shows signal waveforms of three alternating voltages Vres1, Vres2, Vres3 during one period. As explained in the following, each period of the three alternating voltages Vres1, Vres2, Vres3 includes two operating cycles of the respective switching circuit 2a, 2b, 2c. In the example illustrated in Figure 8, a first alternating voltage Vres1 is that one of the three alternating voltages Vresa, Vresb, Vresc that has the highest power transfer duty cycle, a second alternating voltage Vres2 is that one of the three alternating voltages Vresa, Vresb, Vresc that has the second highest power transfer duty cycle, and a third alternating voltage Vres3 is that one of the three alternating voltages Vresa, Vresb, Vresc that has the lowest power transfer duty cycle.

Referring to Figure 8, generating each period of the three resonant voltages Vres1, Vres2, Vres3 includes (a) operating the respective switching circuit in a first operating cycle so that the alternating voltage Vres1, Vres2, Vres3 has a first polarity; and (b) operating the respective switching circuit in a second operating cycle so that the alternating voltage Vres1, Vres2, Vres3 has a second polarity opposite the first polarity. Just for the purpose of illustration, in the example illustrated in Figure 8, the first polarity is positive and the second polarity is negative, so that the respective alternating voltage Vres1, Vres2, Vres3 is positive during the respective power transfer duration Ton1, Ton2, Ton3 in a first half-period and negative during the respective power transfer duration Ton1, Ton2, Ton3 in a second half period.

The voltage level of each alternating voltage Vres1, Vres2, Vres3 during the respective power transfer duration Ton1, Ton2, Ton3 is dependent on the voltage level of the input voltage received by the switching circuit generating the respective alternating voltage. In Figure 1, V1 denotes the input voltage received by the switching circuit that generates the first alternating voltage Vres1, V2 denotes the input voltage received by the switching circuit that generates the second alternating voltage Vres2, and V3 denotes the input voltage received by the switching circuit that generates the third alternating voltage Vres3. In the example illustrated in Figure 8, the alternating voltages Vres1, Vres2, Vres3 are generated such that (a) during the first operating cycle and during the power transfer duration Ton1, Ton2, Ton3 the voltage level of the respective alternating voltage Vres 1, Vres2, Vres3 is given by the magnitude |V1|, IV21, |V3| of the respective input voltage V1, V2, V3, and (b) during the second operating cycle and during the power transfer duration Ton1, Ton2, Ton3 the voltage level of the respective alternating voltage Vres1, Vres2, Vres3 is given by the inverted magnitude -|V1|, -|V2|, - | V31 of the respective input voltage V1, V2, V3.

As explained above, the input voltages Vina, Vinb, Vinc vary over the time. In the example illustrated in Figure 8, V1 represents that one of the three input voltages Vina, Vinb, Vine that instantaneously has the highest magnitude, V2 represents that one of the three input voltages Vina, Vinb, Vine that instantaneously has the second highest magnitude, and V3 represents that one of the three input voltages Vina, Vinb, Vine that instantaneously has the lowest magnitude.

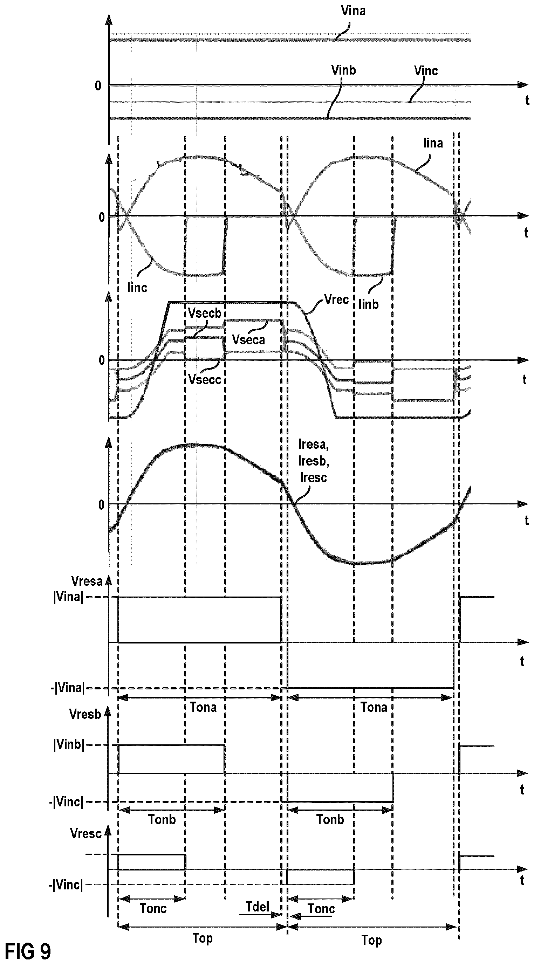

Figure 9 shows signal diagrams that illustrate one example of the method according to Figure 5 for operating the power converter stages 1a, 1b, 1c in greater detail. More specifically, Figure 9 shows signal diagrams of the input voltages Vina, Vinb, Vine, the resonant voltage Vresa, Vresb, Vresc generated by the switching circuits 2a, 2b, 2c based on the input voltages Vina, Vinb, Vine, the resonant currents Iresa, Iresb, Iresc and the input currents Iina, Iinb, Iinc resulting from the input voltages Vina, Vinb, Vinc and the resonant voltages Vresa, Vresb, Vresc, the converter stage output voltages Vseca, Vsecb, Vsecc, and the rectifier input voltage Vrec. Just as an example, Figure 9 illustrates the signal diagrams during a time period in which input voltage Vina is positive and has the highest magnitude of the three input voltages Vina, Vinb, Vine, input voltage Vinb is negative and has the second highest magnitude of the three input voltages Vina, Vinb, Vine, and input voltage Vinc is negative and has the lowest magnitude of the three input voltages Vina, Vinb, Vine. This scenario occurs around time instance t1 illustrated in Figure 2, for example. Thus, in the example illustrated in Figure 9, input voltage Vina corresponds to the first input voltage V1 illustrated in Figure 7, input voltage Vinb corresponds to the second input voltage V2 illustrated in Figure 7, and input voltage Vinc corresponds to the third input voltage V3 illustrated in Figure 7.

Figure 9 shows the signal diagrams essentially over the duration of one period of the alternating voltages Vresa, Vresb, Vresc. As can be seen from Figure 9, the resonant currents Iresa, Iresb, Iresc in the resonant circuits 4a, 4b, 4c of the converter stages 1a, 1b, 1c are the same. Furthermore, during the power transfer durations Ton1, Ton2, Ton3 the magnitudes of the input currents Iina, Iinb, Iinc equal the magnitudes of the resonant currents Iresa, Iresb, Iresc. In the remainder of the operating cycles the input currents Iina, Iinb, Iinc are zero. Thus, the average input currents Iina, Iinb, Iinc can be adjusted by suitably adjusting the power transfer durations Tona, Tonb, Tone. In the example illustrated in Figure 9, the first converter stage 1a has the longest power transfer duration of the three power transfer durations Ton1, Ton2, Ton3 so that the first converter stage 1a has the highest average input current, the second converter stage 1b has the second longest power transfer duration of the power transfer durations Tona, Tonb, Tone, so that the second converter stage 1b has the second highest average input current, and the third converter stage Ic has the shortest power transfer duration, so that the third converter stage Ic has the lowest average input current.

In each of the converter stages 1a, 1b, 1c, the current direction of the respective input current Iina, Iinb, Iinc is dependent on the current direction of the respective resonant current Iresa, Iresb, Iresc and the polarity of the respective input voltage Vina, Vinb, Vine, wherein the switching circuits 2a, 2b, 2c are controlled such that the average input current received by each converter stage 1'sa, 1b, 1c has the same polarity as the respective input voltage Vina, Vinb, Vine in order to achieve a PFC functionality. In the example illustrated in Figure 9, in which input voltage Vina is positive and input voltages Vinb, Vinc are negative, the average input current Iina is positive and the average input currents Iinb, Iinc are negative. In this example (1) first resonant voltage Vresa equals the input voltage Vina during the power transfer duration Tona in the positive half period, and equals the inverted input voltage -Vina during the power transfer duration Tona in the negative half-period; (2) second resonant voltage Vresb equals the inverted input voltage -Vinb during the power transfer duration Tonb in the positive half-period, and equals the input voltage Vinb during the power transfer duration Tonb in the negative half-period; and (3) third resonant voltage Vresc equals the inverted input voltage -Vinc during the power transfer duration Tone in the positive half-period, and equals the input voltage Vine during the power transfer duration Tone in the negative half period.

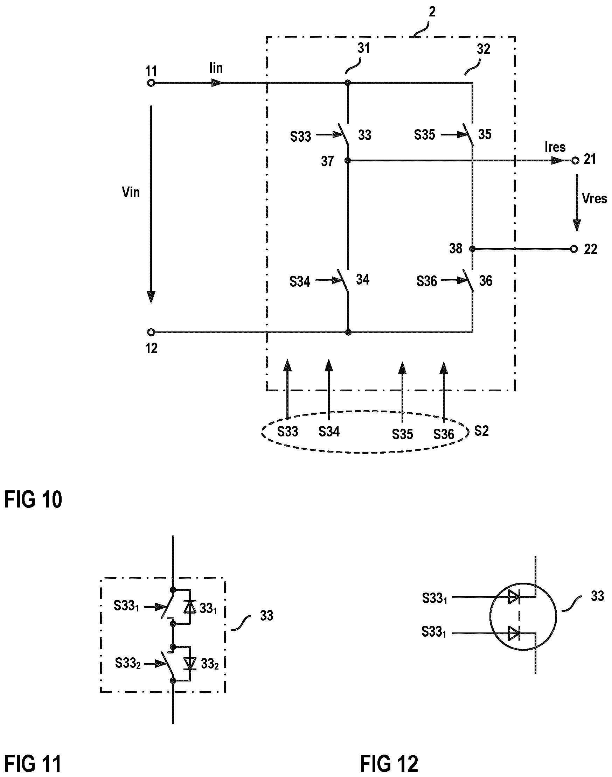

Figure 10 illustrates one example of a switching circuit that may be used in the converter stages 1a, 1b, 1c. The switching circuit 2 illustrated in Figure 10 represents an arbitrary one of the switching circuits 2a, 2b, 2c illustrated in Figure 7, wherein 11, 12 denote respective ones of the input nodes 11a, 11b, 11c, 12a, 12b, 12c; Vin represents the respective one of the input voltages Vina, Vinb, Vine; Vres represents the respective one of the alternating voltages Vresa, Vresb, Vresc; Ires represents the respective one of the resonant currents Iresa, Iresb, Iresc; and S2 represents the respective one of the one or more control signals S2a, S2b, S2c.

Referring to Figure 10, the switching circuit 2 includes two half-bridges 31, 32 that each include a first switch 33, 35, a second switch 34, 36, and a tap 37, 38, the latter being a circuit node between the first switch 33, 35 and the second switch 34, 36 of the respective half-bridge 31, 32. The first switch 33, 35 and the second switch 34, 36 of each half-bridge 31, 32 are connected in series between the input nodes 11, 12 of the switching circuit 2. The tap 37 of the first half-bridge 31 is connected to a first output node 21 (which represents the respective one of output nodes 21a, 21b, 21c illustrated in Figure 7). The tap 38 of the second half-bridge 32 is connected to a second output node 22 (which represents the respective one of the output nodes 22a, 22b, 22c illustrated in Figure 7).

Each of the switches 33, 34, 35, 36 is configured to switch on or off dependent on a respective control signal S33, S34, S35, S36. According to one example, each of these control signals S33-S36 is a sub-signal of the control signal S2 received from the control circuit (not illustrated in Figure 10).

The switching circuit 2 can be operated in three different operating states, (i) a first operating state in which the switching circuit 2 generates the resonant voltage Vres such that the resonant voltage Vres essentially equals the input voltage Vin, Vres=Vin (ii) a second operating state in which the switching circuit 2 generates the resonant voltage Vres such that the resonant voltage Vres essentially equals the inverted input voltage, Vres = -Vin, and (iii) a third input voltage in which the switching circuit 2 generates the resonant voltage Vres such that the resonant voltage Vres is zero, Vres=0.

Operating the switching circuit 2 in the first operating state includes switching on the first switch 33 of the first half-bridge 31 and the second switch 36 of the second half-bridge 32, and switching off the second switch 34 of the first half-bridge 31 and the first switch 35 of the second half-bridge 32. In this operating mode, the first input node 11 is connected to the first output node 21 and the second input node 12 is connected to the second output node 22, so that the resonant voltage Vres equals the input voltage Vin.

Operating the switching circuit 2 in the second operating state includes switching on the second switch 34 of the first half-bridge 31 and the first switch 35 of the second half-bridge 32 and switching off the first switch 33 of the first half-bridge 31 and the second switch 36. In this operating mode, the first input node 11 is connected to the second output node 22 and the second input node 12 is connected to the first output node 31, so that the resonant voltage Vres equals the inverted input voltage -Vin.

In each of the first and second operating states, the switching circuit 2 connects the input nodes 11, 12 to the output nodes 21, 22, so that a power transfer from the input 11, 12 to the resonant circuit (not shown in Figure 10) can take place. In this operating states, the magnitude of the input current Iin equals the magnitude of the resonant current Ires, wherein the polarity of the input current Iin relative to the polarity of the resonant current Ires is dependent on the specific one of the first and second operating states. In the first operating state, the polarity of the input current Iin equals the polarity of the resonant current. In the second operating state, the polarity of the input current Iin is opposite the polarity of the resonant current. Thus, by suitably selecting the operating state of the switching circuit 2 a predefined polarity of the input current Iin can be achieved. Thus, even though the resonant current Ires is an alternating current, the input current Iin can either be a positive input current are a negative input current, so that the input current Iin has the same polarity as the input voltage Vin in order to achieve a PFC functionality.

Operating the switching circuit 2 in the third operating mode includes either switching on the first switches 33, 35 of the first and second half-bridges 31, 32 and switching off the second switches 34, 36, or switching on the second switches 34, 36 of the two half-bridges 31, 32. In this operating mode, the first and second output nodes 21, 22 are short-circuited, so that the resonant voltage Vres is zero. In the third operating state, the switching circuit 2 separates the input nodes 11, 12 from the output nodes 21, 22, so that no power transfer can take place from the input 11, 12 to the resonant circuit (not shown in Figure 10). In the third operating state, the switching circuit 2 provides for a freewheeling of the resonant current Ires. The third operating state may therefore also be referred to as freewheeling state of the switching circuit 2.

According to one example, the switches 33, 34, 35, 36 of the switching circuit 2 are bidirectionally blocking electronic switches. A "bidirectionally blocking switch" is an electronic switch that, in an off-state, is configured to block independent of the polarity of a voltage applied across the switch. A bidirectionally blocking electronic switch may be implemented in various ways. Two different examples for implementing bidirectionally blocking switches are illustrated in Figures 11 and 12. Each of these figures illustrates one example for implementing the first switch 33 of the first half-bridge 31 as a bidirectionally blocking switch. The remainder of the switches in the switching circuit 2 can be implemented in the same way.

In the example illustrated in Figure 11, the bidirectionally blocking switch 33 includes 2 unidirectionally blocking electronic switches $33_1$, $33_2$ connected in series. A "unidirectionally blocking" his an electronic switch that, in the off-state, is blocking when the voltage applied across the switch has a first polarity and is conducting when the voltage applied across the switch has a second polarity opposite the first polarity.

Each of the unidirectionally blocking switches $33_1$, $33_2$ includes a switching element and a freewheeling element, such as a diode, connected in parallel with the switching element. The unidirectionally blocking switches are connected in series such that the freewheeling elements are connected in anti-series. Each of the unidirectionally blocking switches $33_1$, $33_2$ can be implemented as a MOSFET, for example. In a MOSFET, the integrated body diode forms the freewheeling element. Implementing each of the unidirectionally blocking switches as a MOSFETs, however, is only an example. It is also possible to implement these switches using any other kind of electronic switch and a freewheeling element, such as a diode, connected in parallel with the electronic switch.

In the example illustrated in Figure 12, the bidirectionally blocking switch is implemented as a bidirectionally blocking GaN switch, which is a monolithic implementation of a bidirectional which.

Each of the bidirectionally blocking switches 33 illustrated in Figures 11 and 12 includes two control nodes, wherein each of these control nodes is configured to receive a respective control signal $S33_1$, $S33_2$ that controls operation of one of the unidirectionally blocking switches. The unidirectionally blocking switches can be switched on or off independently from each other, so that the bidirectionally blocking switch 33 can be operated in four different operating states, (i) a bidirectionally blocking state, which is an operating state in which both switches $33_1$, $33_2$ are switched off; (ii) a bidirectionally conducting state, which is an operating state in which both switches $33_1$, $33_2$ are switched on; (iii) a first unidirectionally conducting state, which is an operating state in which a first switch $33_1$ is switched on and a second switch $33_2$ is switched off, so that the electronic switch 33 is configured to conduct a current in a direction that is governed by the polarity of the freewheeling element of the second switch $33_2$; and (iv) a second unidirectionally conducting state, which is an operating state in which the first switch $33_1$ is switched off and the second switch $33_2$ is switched on, so that the electronic switch 33 is configured to conduct a current in a direction that is governed by the polarity of the freewheeling element of the first switch $33_1$.

Operating a switching circuit 2 of the type illustrated in Figure 10 with bidirectionally blocking switches may include operating the electronic switches 33-36 such that switching each switch 33-36 from the bidirectionally conducting state to the bidirectionally blocking state may include a transition phase in which the respective switch 33-36 operates in one of the first and second unidirectionally conducting states. Equivalently, switching each switch 33-36 from the bidirectionally blocking stage to the bidirectionally conducting state may include a transition phase in which the respective switch operates in one of the first and second unidirectionally conducting states. In this way, a hard commutation in the switching circuit 2 can be avoided and zero voltage switching (ZVS) can be achieved. Operating a switching circuit of the type illustrated in Figure 10 with two half-bridges and including bidirectionally blocking switches in such a way that hard commutation is avoided, is basically known, so that no further explanation is required in this regard.

The electronic switches 33-36 included in the switching circuit 2 may each include a parasitic capacitance (not illustrated in Figure 10), which is sometimes referred to as output capacitance. The output capacitance is charged when the respective electronic switch 33-36 switches from the on-state to the off-state. In order to reduce switching losses it is desirable to switch the electronic switches 33-36 from the off-state to the on-state under zero voltage switching (ZVS) conditions. This includes that each time a respective electronic switch 33-36 switches from the on-state to the off-state the parasitic capacitance has already been discharged. Discharging the parasitic capacitance requires a certain current to flow through the circuit path that includes the parasitic capacitance to be discharged. In the converter stages 1a, 1b, 1c explained before the currents through the switching circuits 2a, 2b, 2c are independent of the instantaneous input voltage Vina, Vinb, Vinc received by the respective converter stage 1a, 1b, 1c. Thus, even when the instantaneous input voltage Vina, Vinb, Vinc is very low, or even zero, a current flows through the respective switching circuit 2a, 2b, 2c that provides for ZVS.

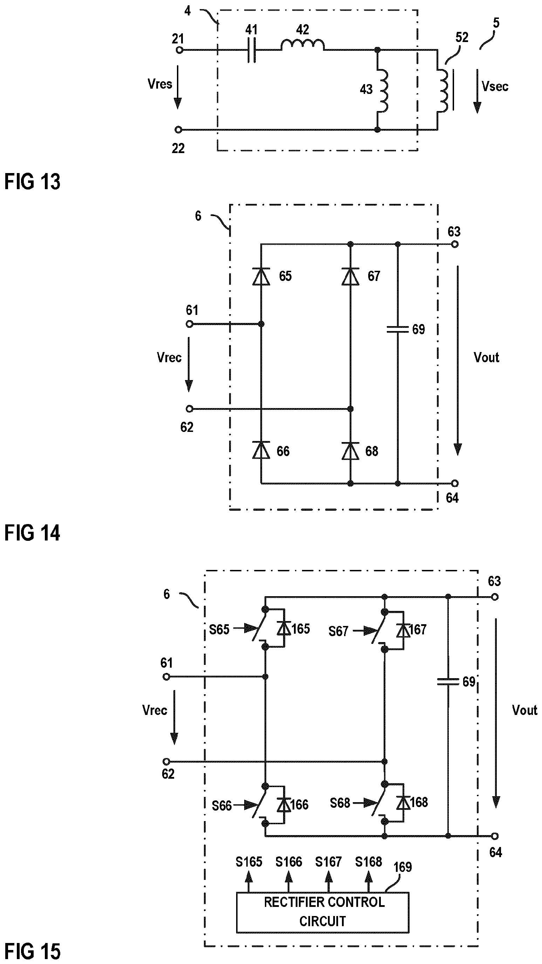

Figure 13 illustrates one example of the resonant circuit 4. The resonant circuit 4 shown in Figure 13 represents an arbitrary one of the resonant circuits 4a, 4b, 4c illustrated in Figure 7.

In the example illustrated in Figure 13, the resonant circuit 4 is an LLC circuit. The LLC circuit includes a series circuit including a capacitor 41, a first inductor 42, and a second inductor 43. The series circuit is connected between the circuit nodes 21, 22 where the resonant voltage Vres is available, so that the LLC circuit is excited by the resonant voltage Vres. Referring to Figure 13, the second inductor 43 is connected in parallel with the primary winding 52 connected to the resonant circuit 4. (The primary winding 52 illustrated in Figure 13 represents an arbitrary one of the primary windings 52a, 52b, 52c illustrated in Figure 7, and transformer 5 represents the respective transformer 5a, 5b, 5c.)According to one example, the second inductor 43 is a discrete device connected in parallel with the primary winding 52. According to another example, the second inductor 42 is the magnetizing inductance of the transformer. In this case, the second inductor 42 is formed by the transformer 5 and, therefore, is an integral part of the transformer 5.

Figures 14-18 illustrate different examples of the rectifier 6.

In the example according to Figure 14, the rectifier 6 includes a passive rectifier bridge connected between the input nodes 61, 62, where the rectifier input voltage Vrec is received, and the output 63, 64, where the output voltage Vout is provided. The passive rectifier bridge includes a first bridge leg and a second bridge leg that each include a first rectifier element 65, 67 and a second rectifier element 66, 68. The rectifier elements 65-68 are diodes, for example. The first rectifier element 65 of the first bridge leg is connected between the first input node 61 and the first output node 63, and the first rectifier element 67 of the second bridge leg is connected between the second input node 62 and the first output node 63. The second rectifier element 66 of the first bridge leg is connected between the first input node 61 and the second output node 64, and the second rectifier element 68 of the second bridge leg is connected between the second input node 62 and the second output node 64. According to one example, polarities of the rectifier elements 65, 68 are such that the first rectifier element 65 of the first bridge leg enables a current flow when a positive voltage is applied between the first input node 61 and the first output node 63; the second rectifier element 66 of the first bridge leg enables a current flow when a negative voltage is applied between the first input node 61 and the second output node 64; the first rectifier element 67 of the second bridge leg enables a current flow when a positive voltage is applied between the second input node 62 and the first output node 63; and the second rectifier element 68 of the second bridge leg enables a current flow when a negative voltage is applied between the second input node 62 and the second output node 64. Optionally, an output capacitor 69 is connected between the output nodes 63, 64.

Figure 15 illustrates a rectifier 6 according to another example. In this example, the rectifier 6 includes an active rectifier bridge. The active rectifier bridge is different from the passive rectifier bridge according to Figure 14 in that the active rectifier bridge includes active rectifier elements 165-168 instead of passive rectifier elements 65-68. The active rectifier elements may include an electronic switch and a passive rectifier element, such as a diode, connected in parallel with the electronic switch. The active rectifier elements may be connected to the input 61, 62 and the output 63, 64 in such a way that the passive rectifier elements form a passive rectifier bridge of the same type as illustrated in Figure 14.

In addition to the active rectifier elements 165-168 the rectifier 6 includes a control circuit 169 that is configured to control operation of the electronic switches in the active rectifier elements 165-168. The control circuit 169 may be configured to detect polarities of voltages across the active rectifier elements 165-168 and may be configured to switch on the switching element of a respective active rectifier element 165-168 each time the voltage across the active rectifier element has a polarity that forward biases the respective passive rectifier element. Switching on the electronic switch instead of simply using the passive rectifier element reduces losses that occur in the active rectifier bridge according to Figure 15 as compared to losses occurring in the passive rectifier bridge according to Figure 14. Optionally, an output capacitor 169 is connected between the output nodes 63, 64.

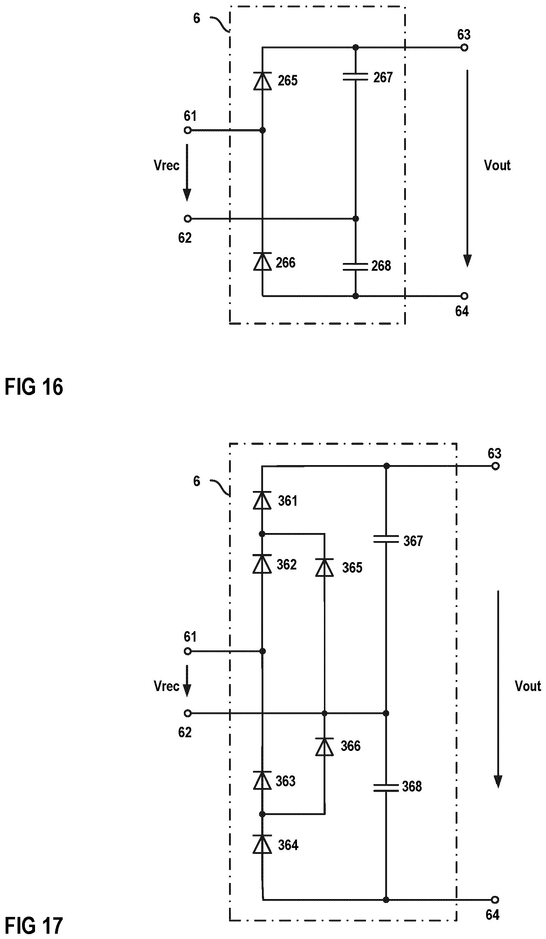

Figure 16 illustrates one example of a rectifier 6 that includes a voltage doubler topology. This rectifier 6 includes a first bridge leg with a first rectifier element 265 connected between the first input node 61 and the first output node 63 and a second rectifier element 266 connected between the first input node 61 and the second output node 64. A second bridge leg includes a first capacitor 267 connected between the second input node 62 and the first output node 63 and a second capacitor 268 connected between the second input node 62 and the second output node 64. The polarities of the rectifier elements 265, 266 are the same as in the rectifiers 6 according to Figures 14 and 15. These rectifier elements 265, 266 may be implemented as passive rectifier elements (as illustrated in Figure 16). This, however, is only an example. These rectifier elements 265, 266 may also be implemented as active rectifier elements.

Figure 17 shows a modification of the rectifier 6 according to Figure 16. The rectifier 6 according to Figure 17 has a voltage doubler topology and includes a second bridge leg with a first capacitor 367 and a second capacitor 368 of the same type as the rectifier 6 according to Figure 16. A first bridge leg includes a first rectifier element 361 and a second rectifier element 362 connected in series between the first input node 61 and the first output node 63, and a third rectifier element 363 and a fourth rectifier element 3 64 connected in series between the first input node 61 and the second output node 64. The polarities of these rectifier elements 361-364 are such that a current can flow from the first input node 61 to the first output node 63 when a voltage between the first input node 61 and the first output node 63 is positive, and such that a current can flow from the first input node 61 to second output node 64 when a voltage between the first input node 61 and the second output node 64 is negative.

Referring to Figure 17, the rectifier 6 further includes a fifth rectifier element 365 connected between the second input node 62 and a circuit node between the first and second rectifier elements 361, 362. Furthermore, a sixth rectifier element 366 is connected between the second input node 62 and a circuit node between the third and fourth rectifier elements 363, 364. According to one example, the fifth and sixth rectifier elements 365, 366 are passive rectifier elements. The first to fourth rectifier elements 361-364 can be implemented as passive rectifier elements (as illustrated) or as active rectifier elements (not illustrated).

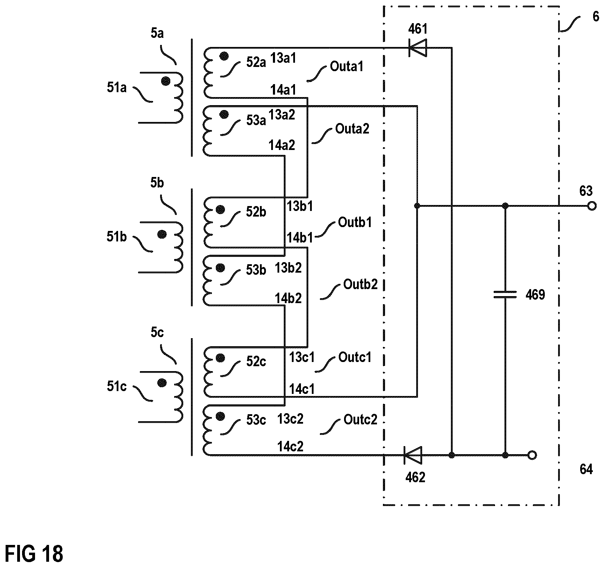

Figure 18 shows modifications of the transformers 5a, 5b, 5c explained herein before and a corresponding rectifier 6. In the example illustrated in Figure 18, each of the transformers 5a, 5b, 5c includes a first secondary winding 52a, 52b, 52c providing a first output Outa1, Outb1, Outc1 with first and second output nodes 13a1, 14a1, 13b1, 14b1, 13c1, 14c1 and a second secondary winding 53a, 53b, 53c providing a second output Outa2, Outb2, Outc2 with third and fourth output nodes 13a2, 14a2, 13b2, 14b2, 13c2, 14c2. The first secondary windings 52a, 52b, 52c are connected in series with each other to form a first series circuit. The first series circuit is connected to the rectifier circuit 6. More specifically, the first series circuit is connected in series with a first rectifier element 461, wherein the series circuit including the first series circuit and the first rectifier element 461 is connected in parallel with an output capacitor 469. The output capacitor 469 is connected between the output nodes 63, 64. The second secondary windings 53a, 53b, 53c are connected in series with each other to form a second series circuit. The second series circuit is connected to the rectifier circuit 6. More specifically, the second series circuit is connected in series with a second rectifier element 462, wherein the series circuit including the second series circuit and the second rectifier element 462 is connected in parallel with the output capacitor 469. The polarities of the first and second rectifier elements 461, 462 are such that the first rectifier element 461 conducts a current when a voltage across the primary winding 51a, 51b, 51c has a first polarity and the second rectifier element 462 conduct a current, when the voltage across the primary winding 51a, 51b, 51c has a second polarity opposite the first polarity.

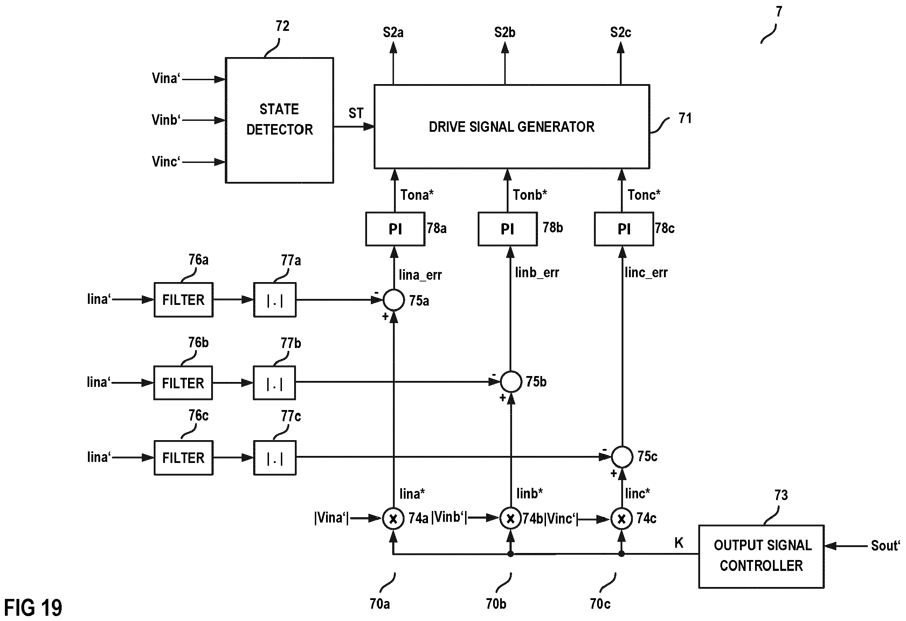

Figure 19 illustrates one example of the control circuit 7 that is configured to control operation of the switching circuits 2a, 2b, 2c included in the converter stages 1a, 1b, 1c. Referring to Figure 19, the control circuit 7 includes a drive signal generator 71 that is configured to generate the drive signals S2a, S2b, S2c received by the switching circuits 2a, 2b, 2c. As explained above, each of the drive signals S2a, S2b, S2c may include several sub-signals for controlling the electronic switches in the respective switching circuits 2a, 2b, 2c. The drive signal generator 71 receives desired power transfer durations Tona*, Tonb*, Tonc* for each of the converter stages 1a, 1b, 1c. Desired power transfer duration Tona* represents the desired power transfer duration of the first converter stage 1a, desired power transfer duration Tonb* represents the desired power transfer duration of the second converter stage 1b, and desired power transfer duration Tonc* represents the desired power transfer duration of the third converter stage 1c.

According to one example, the drive signal generator 71 selects the maximum of the desired power transfer durations Tona*, Tonb*, Tonc* and adjusts (calculates) the duration Top of one operating cycle and, therefore, the operating frequency fop based on the maximum desired power transfer duration. According to one example, the duration Top of one operating cycle is calculated by adding a predefined delay time to the maximum desired power transfer duration, that is,

$$Top = \max(Tona^*, Tonb^*, Tonc^*) + Tdel = Tonmax + Tdel \qquad (3),$$

where $max(Tona^*, Tonb^*, Tonc^*)$ denotes the maximum of the desired power transfer durations, and Tdel denotes the predefined delay time. According to one example, this delay time, which is also illustrated in Figures 8 and 9, is much shorter than the maximum desired power transfer duration Tonmax. According to one example, the delay time Tdel is less than 5% or even less than 1% of the maximum desired power transfer duration. According to one example, the delay time Tdel is less than 10 ns.

According to one example, the delay time Tdel is selected such that the switches in the switching circuit that has the maximum desired power transfer duration and, therefore, the maximum power transfer duty cycle can switch under ZVS conditions when the switching circuit changes from the first operating cycle (which is the operating cycle in which the resonant voltage is positive in the examples illustrated in Figures 8 and 9) to the second operating cycle (which is the operating cycle in which the resonant voltage is negative in the examples illustrated in Figures 8 and 9).

Based on the operating cycle duration Top, the drive signal generator 71 calculates the power transfer duty cycles da, db, dc of the converter stages in accordance with equations (2a)-(2c), so that,

$$da = \frac{Tona*}{Top} \tag{4a}.$$

Equivalently, power transfer duty cycles d1, d2 of the first and second converter stages are given by

$$db = \frac{Tonb*}{Top} \tag{4b},$$

$$dc = \frac{Tonc*}{Top} \tag{4c},$$

where Tona*, Tonb*, Tonc* are the desired power transfer durations of the converter stages 1a, 1b, 1c.

Referring to Figure 19, the drive signal generator 71 further receives a state signal ST from a state detector 72. The state detector receives measured input voltages Vina', Vinb', Vinc', wherein each of these measured input voltages Vina', Vinb', Vinc' represents a respective one of the input voltages Vina, Vinb, Vine. The state detector 72 is configured to detect an instantaneous state of the input voltage system with the input voltages Vina, Vinb, Vine. This is explained with reference to Figure 2.

Referring to Figure 2, in each period of the input voltages Vina, Vinb, Vine the input voltage system may include six different states ST1-ST6, wherein each of these states ST1-ST6 is defined by the polarities of the input voltages Vina, Vinb, Vinc such that within one state the polarities do not change. In a first state ST1, for example, first and third input voltages Va, Vc are positive and second input voltage Vb is negative; in a second state ST2, for example, first input voltage Vina is positive and second and third input voltages Vinb, Vinc are negative; etc.

The control circuit 7 according to Figure 19 is configured to generate switching patterns received by the switching circuits 2a, 2b, 2c dependent on the power transfer duty cycles da, db, dc and dependent on a state signal ST received from the state detector 72. The state signal ST indicates the instantaneous state of the input voltage system with the input voltages Vina, Vinb, Vinc and enables the drive signal generator 71 to generate the switching patterns of the drive signals S2a, S2b, S2c such that the switching circuits are operated in the first and second operating states in the correct order in order to correctly generate the respective resonant voltage Vresa, Vresb, Vresc. As explained above, the resonant voltages Vresa, Vresb, Vresc may be generated such that they have a positive signal level in the first half-period and a negative signal level in the second half period. Furthermore, as explained above, a positive signal level of a respective resonant voltage can be generated, for example, by operating the switching circuit 2a, 2b, 2c in the first operating state when the respective input voltage Vina, Vinb, Vinc is positive and can be generated by operating the switching circuit 2a, 2b, 2c in the second operating state when the respective input voltage Vina, Vinb, Vinc is negative.

Referring to Figure 19, the control circuit 7 further includes an output controller 73 that is configured to receive at least one measured output signal Sout' and provide a feedback signal K based on the at least one measured output signal. In Figure 19, Sout' represents the at least one measured output signal. The measured output signal Sout' may include the measured output current, the measured output voltage, or both the measured output current and the measured output voltage. According to one example, the feedback signal K represents a desired output power of the power converter and, therefore, represents a desired input power of the power converter.

Furthermore, the control circuit 7 includes a plurality of controller branches 70a, 70b, 70c that each receive the feedback signal K and generate a respective one of the desired power transfer durations Tona*, Tonb*, Tonc*. Each of these controller branches 70a, 70b, 70c includes a multiplier 74a, 74b, 74c that receives the feedback signal K and multiplies the feedback signal K with the absolute value of respective measured input voltage Vina', Vinb', Vinc' to output a respective input current reference Iina*, Iinb*, Iinc*. Each of the measured input voltages Vina', Vinb', Vinc' represents a respective one of the input voltages Vina, Vinb, Vinc and can be obtained by measuring the input voltage Vina, Vinb, Vine using a conventional voltage sensor (not illustrated). The input current references Iina*, Iinb*, Iinc* represent desired average input currents to be received at the inputs Ina, Inb, Inc. By multiplying the feedback signal K with the measured input voltages Vina', Vinb', Vinc' in order to obtain the input current references Iina*, Iinb*, Iinc* the input current references Iina*, Iinb*, Iinc* are proportional to the input voltages Vina, Vinb, Vine. Thus, average input currents Iina, Iinb, Iinc are proportional to the input voltages Vina, Vinb, Vine, so that the power converter includes a PFC functionality.

Referring to Figure 19, each of the desired power transfer durations Tona*, Tonb*, Tonc* is generated by a respective controller 78a, 78b, 78c, such as a proportional-integral (PI) controller based on an input current error Iina_err, Iinb_err, Iinc_err. The input current error Iina_err, Iinb_err, Iinc_err represents a difference between the desired input current Iina*, Iinb*, Iinc* and the instantaneous average input current. In each of the controller branches 70a, 70b, 70c the input current error Iina_err, Iinb_err, Iinc_err is provided by a subtractor 75a, 75b, 75c that receives the input current reference Iina*, Iinb*, Iinc* and an average measured input current. The average measured input current is obtained, for example, by filtering the measured (instantaneous) input current Iina', Iinb', Iinc' using a low-pass filter 76a, 76b, 76c and obtaining the absolute value of the filter output using a respective absolute value calculator 77a, 77b, 77c. The low-pass filter 76a, 76b, 76c is implemented such, for example, that the measured input current Iina', Iinb', Iinc' is averaged at least over the duration of one operating cycle. The measured input currents Iina', Iinb', Iinc' may be obtained by measuring the input currents Iina, Iinb, Iinc using conventional current sensors.

It should be noted that by calculating the absolute values of the measured input voltages Vina', Vinb', Vinc' and the absolute values of the filtered measured input currents Iina', Iinb', Iinc' information on the polarity of the input voltages Vina, Vinb, Vinc and the input currents Iina, Iinb, Iinc is removed. This information, however, is again introduced into the control loop by the state detector 72.

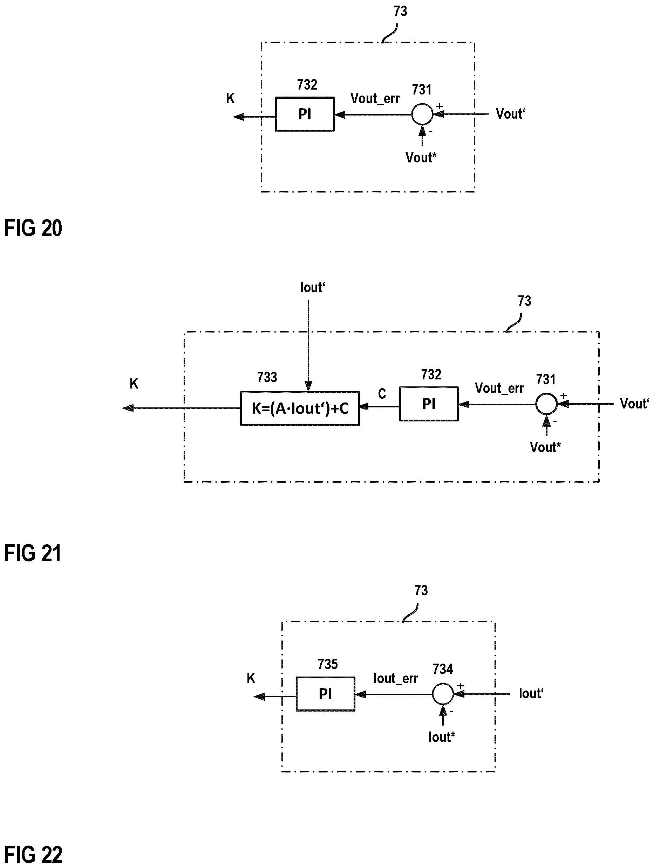

Figures 20-22 illustrate block diagrams of the output signal controller 73 according to different examples. The output signal controller 73 according to Figure 20 may be used to regulate the output voltage Vout. In this example, the output signal controller 73 receives the measured output voltage Vout' as the output signal Sout', and calculates an output voltage error Vout_err by subtracting an output voltage reference Vout* from the measured output voltage Vout' using a subtractor 731. The output voltage reference represents the desired voltage level of the output voltage Vout. A controller 732, such as a PI controller receives the output voltage error Vout_err and provides feedback signal K based on the output voltage error output voltage error.

Figure 21 shows a modification of the output signal controller 73 according to Figure 17. In the example according to Figure 21, the output signal controller 73 further receives the measured output current Iout' and generates the feedback signal K dependent on both the measured output voltage Vout' and the measured output current Iout'. The output signal controller 73 according to Figure 21 regulates the output voltage Vout. Considering the measured output current Iout' in addition to the measured output voltage Vout' in the generation of the feedback signal K may help to improve the regulation in case of load transients.

In the output signal controller 73 according to Figure 21, a calculation unit 733 receives the output signal from the controller 732 and the measured output current Iout' and calculates the feedback signal K based on the output signal received from the controller 732 (and being dependent on the output voltage error Vout_err) and based on the measured output current Iout'. According to one example, the feedback signal is calculated as follows,

$$K = (A \cdot Iout') + C \tag{5},$$

where C denotes the output signal of the controller 732 and A denotes a constant for adjusting the weight of the measured output current Iout' in the feedback signal K.

Figure 22 illustrates an output signal controller 73 according to another example. The output signal controller 73 according to Figure 22 is configured to regulate the output current Iout. This output signal controller 73 may be used in a power converter of the type illustrated in Figure 1 that is configured to provide an essentially constant output current Iout, for example, for charging a battery. The output signal controller 73 according to Figure 22 is based on the output signal controller 73 according to Figure 20 and is configured to calculate an output current error Iout_err by subtracting an output current reference Iout* from a measured output current Iout'. The measured output current represents the output current Iout and may be obtained by measuring the output current Iout using a conventional current sensor. The output current reference Iout* represents the desired current level of the output current. The output current error Iout_err is generated by a subtractor 734 based on the measured output current Iout' and the output current reference Iout*, for example. A controller 735, such as PI controller, receives the output current error Iout_err and generates the feedback signal K based on the output current error current error Iout_err.

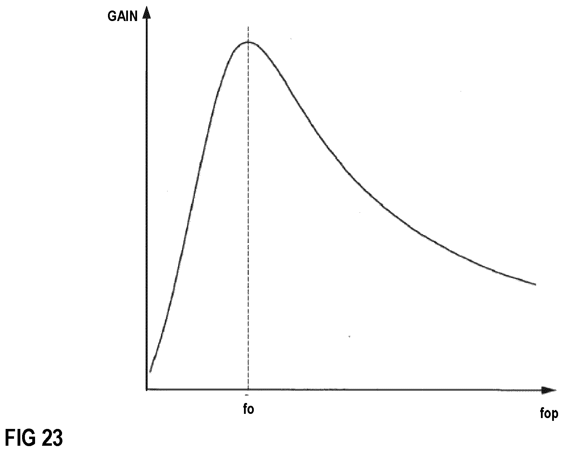

In the power converter explained herein before, by adjusting the power transfer durations Tona. Tonb, Tonc, the input power received by the power converter (and, therefore, the output power provided by the power converter) as well as the signal waveforms of the input currents Iina, Iinb, Iinc can be regulated. As explained above, the maximum power transfer duration Tonmax, which is the maximum of the desired power transfer durations Tona*, Tonb*, Tonc*, defines the operating cycle duration Top and, therefore, the operating frequency fop of the resonant converter stages 1a, 1b, 1c. The operating frequency defines an efficiency or gain of the overall power converter. This is explained with reference to Figure 23.

Figure 23 illustrates the gain of that one of the converter stages 1a, 1b, 1c that has the highest power transfer duration and, therefore, defines the operating frequency fop. As can be seen from Figure 23, the gain (efficiency) of this converter stage is dependent on the operating frequency, wherein the gain has a maximum when the operating frequency fop equals a resonant frequency of the resonant circuit of the converter stage and decreases as the operating frequency fop increases beyond the resonant frequency. According to one example, in the power converter explained before, the desired power transfer durations are adjusted such that the operating frequency is higher than the resonant frequency. In this case, the gain decreases when the operating frequency fop increases, which is equivalent to a decrease of the operating cycle duration. The gain increases when the operating frequency fop decreases, which is equivalent to an increase of the operating cycle duration.

Referring to the above, and as explained with reference to equation (3), adjusting the operating frequency fop may include selecting the maximum of the desired power transfer durations Tona*, Tonb*, Tonc* and adjusting the operating frequency based on the selected maximum. This, however, is only an example.

As can be seen from Figure 23, for example, under low load conditions the switching frequency may increase, that is, the operating cycle duration may decrease. According to one example, the switching circuits 2a, 2b, 2c are operated with a fixed operating frequency when the maximum of the desired power transfer durations Tona*, Tonb*, Tonc* falls below a predefined threshold in order to prevent the operating frequency from increasing in an unduly fashion. In the fixed frequency mode, the operating cycle duration is defined by the fixed operating frequency. The duty cycles da, db, dc of the converter stages are in accordance with equations (4a), (4b), (4c). In the fixed frequency mode, even in the converter stage having the maximum desired power transfer duration, the delay time between successive on-states can be significantly higher than the delay time Tdel explained with reference to equation (3).

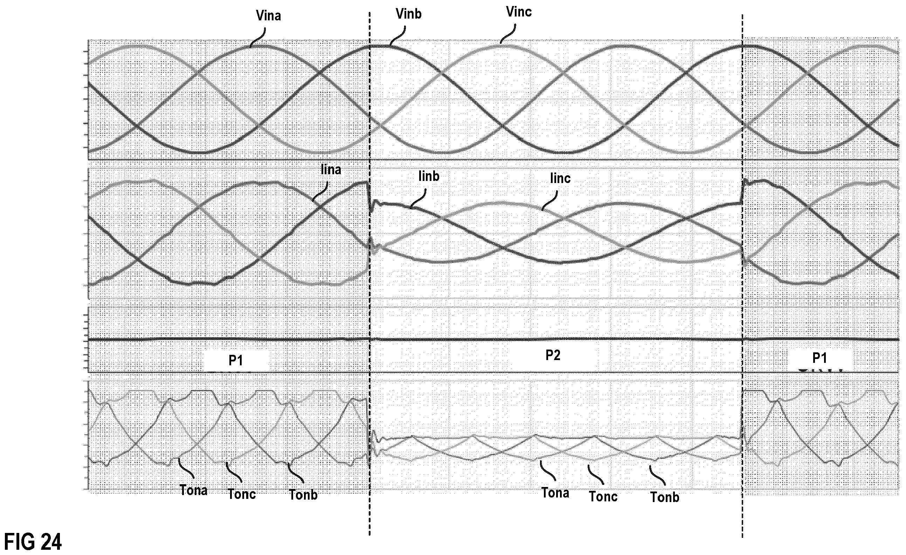

Figure 24 shows signal diagrams of the input voltages Vina, Vinb, Vine, average input currents Ina, Iinb, Iinc, and the corresponding power transfer durations Tona, Tonb, Tone of the power converter when operated at a first input power P1 and at a second input power P2 lower than the first input power P1. Just for the purpose of explanation it is assumed that the output voltage of the power converter is regulated to be essentially constant.

As can be seen from Figure 24, the average input currents Iina, Iinb, Iinc have the same waveform as the input voltages Vina, Vinb, the Vine, wherein the amplitudes of the input currents Ina, Iinb, Iinc are dependent on the input power and a lower when the input power is lower. Furthermore, as can be seen from Figure 24, the power transfer durations Tona, Tonb, Tone vary over one period of the input voltages Vina, Vinb, Vinc.

Referring to the above, highest one (the maximum) of the power transfer durations Tona, Tonb, Tonc defines the operating frequency fop. As can be seen from Figure 24, at the higher input power P1 the maximum power transfer duration is higher than at the lower input power P2. The higher maximum power transfer duration results in a lower operating frequency which, referring to Figure 23, results in a higher gain (efficiency) of the power converter. Thus, by adjusting the operating frequency the overall efficiency of the power converter and, therefore, the input power and output power can be regulated. The converter stage that operates with the maximum power transfer duration and operates with a power transfer duty cycle of essentially 1 ($\approx$1) defines the resonant currents Iresa, Iresb, Iresc. In the remainder of the converter stages the average input current is adjusted by the respective power transfer duty cycle.

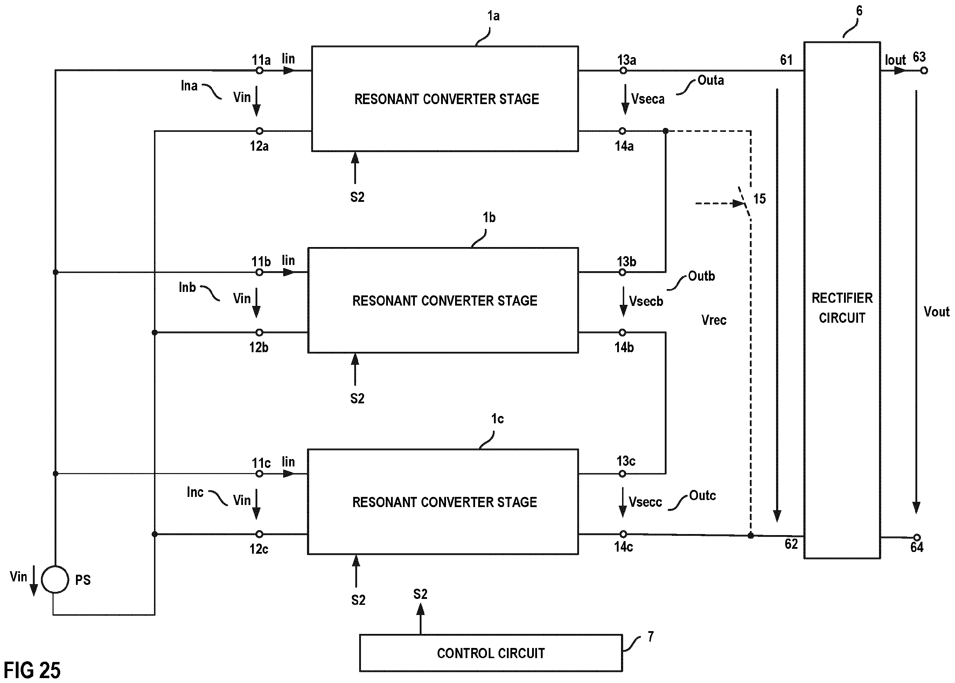

The power converter according to Figure 1 can be operated in a three-phase mode, which includes that each of the converter stages receives a different input voltage. According to another example illustrated in Figure 25, the power converter is operated in a single-phase mode. In this case, the converter stages 1a, 1b, 1c receive the same input voltage Vin and receive the same control signal S2 from the control circuit 7.

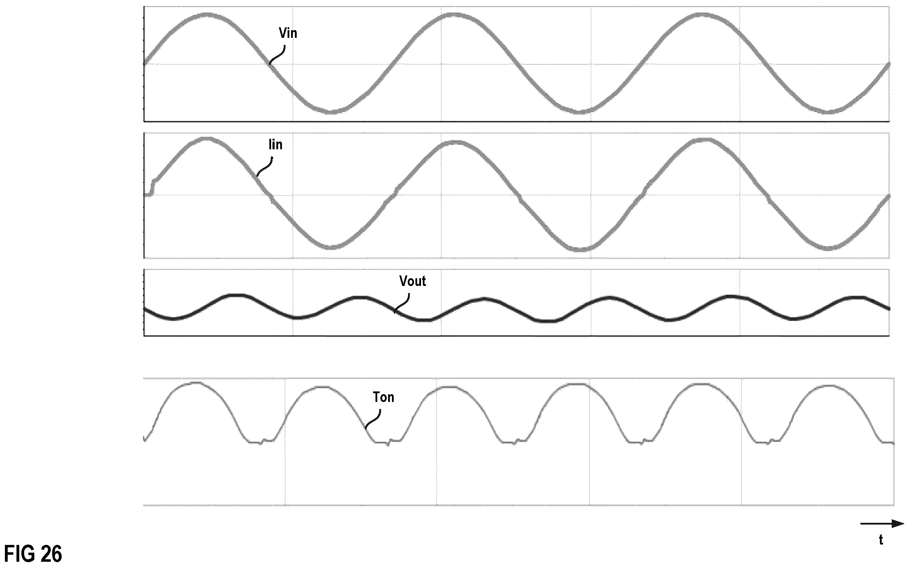

Figure 26 shows signal waveforms that illustrate operating of the power converter in the single-phase mode. More specifically, Figure 26 shows signal waveforms of one example of the input voltage Vin, the resulting input current Iin, the output voltage Vout, and the on-time duration Ton, which is the same for each of the different resonant converter stages 1a, 1b, 1c. As can be seen from Figure 26, the power converter operates as a PFC converter. That is, the signal waveform of the input current In getting equals the waveform of the input voltage Vin, which is a sinusoidal waveform in the example illustrated in Figure 26. Furthermore, in the example illustrated in Figure 26, the input current Iin is essentially in phase with the input voltage Vin.

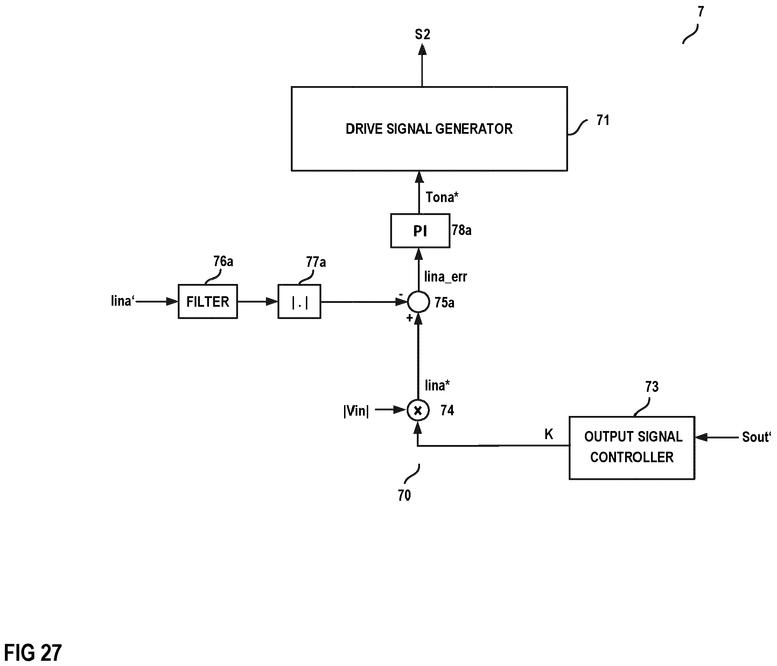

Figure 27 illustrates one example of the control circuit 7 according to Figure 25 that is configured to control operation of the power converter with several resonant converter stages 1a, 1b, 1c in the single-phase mode. The control circuit 7 according to Figure 27 is based on the control circuit according to Figure 19 and is different from the control circuit 7 according to Figure 19 in that it includes only one of the three controller branches 70a, 70b, 70c. The controller branch 70 of the control circuit 7 according to Figure 27 is implemented in the same way as each of the controller branches 70a, 70b, 70c according to Figure 19. Thus, with regard to the implementation and the functionality of the controller branch 70 according to Figure 27 reference is made to Figure 19 and the corresponding description. In the controller branch 70 according to Figure 27, multiplier 74 corresponds to each of multipliers 74a, 74b, 74c, according to Figure 19, filter 76 corresponds to each of filters 76a, 76b, 76c, magnitude calculator 77 corresponds to each of magnitude calculators 77a, 77b, 77c, subtractor 75 corresponds to each of subtractors 75a, 75b, 75c, and controller 78 corresponds to each of controllers 78a, 78b, 78c.

Moreover, in the control circuit 7 according to Figure 27, a state detector can be omitted. Furthermore, drive signal generator 71 only generates one drive signal S2 based on the desired power transfer duration Ton provided by the controller 78.

As explained with reference to Figure 25, in the single-phase mode, it is possible to operate the several converter stages 1a, 1b, 1c in parallel by providing the same input voltage Vin to the converter stages 1a, 1b, 1c and by operating the converter stage is based on the same control signal S2. This, however, is only an example. According to another example illustrated in dashed lines in Figure 25, the power converter includes a bypass switch 15 that is connected to the output of one of the converter stages 1a, 1b, 1c, the first converter stage 1a in the example illustrated in Figure 25. The bypass switch 15 connects the output Outa of the one converter stage 1a to the rectifier circuit 6 and bypasses the outputs Outb, Outc of the remainder of the converter stages.

The bypass switch 15 can be operated in an on-state or an off-state. When the bypass switch 15 is in the off-state, the power converter can be operated in accordance with any of the examples explained herein before. That is, the power converter may be operated in the three-phase mode or may be operated in the single-phase mode such that the several converter stages 1a, 1b, 1c operate in parallel. When the bypass switch 15 is in the on-state, the output of only 1 of the converter stages is connected to the rectifier circuit 6, so that only one converter stage is active and operates in the single-phase mode. The control circuit for operating the one converter stage in the single-phase mode can be the same as the control circuit illustrated in Figures 27.

In the power converter explained during before, the maximum voltage the electronic switches in the switching circuits 2a, 2b, 2c of the converter stages 1a, 1b, 1c need to withstand is the maximum magnitude of the input voltage Vina, Vinb, Vinc received by the respective converter stage 1a, 1b, 1c. Thus, the switching circuits 2a, 2b, 2c may be implemented with 600 V or 650 V devices when the input voltages Vina, Vinb, Vinc are sinusoidal 230 $V_{RMS}$ voltages, for example. The summing (the combination) of the three voltages resulting from the three input voltages takes place on the secondary side of the transformers 5a, 5b, 5c.

Furthermore, as explained herein before, the current on the secondary side of the transformers 5a, 5b, 5c is the same in each secondary winding 52a, 52b, 52c and, therefore, is the same in each resonant circuit 4a, 4b, 4c. Referring to the above, this helps to achieve ZVS in the switching circuits 2a, 2b, 2c even in those operating scenarios in which the instantaneous voltage level of the input voltage Vina, Vinb, Vinc of the respective converter stage 1a, 1b, 1c is very low.

Some of the aspects explained above are briefly summarized in the following with reference to numbered examples.

Example 1. A power converter, including: a plurality of resonant converter stages each including an input and an output; a rectifier circuit; and a control circuit configured to control operation of the plurality of resonant converter stages, wherein the input of each of the plurality of converter stages is configured to receive a respective input voltage, wherein the outputs of the plurality of resonant converter stages are connected in series, and wherein the rectifier circuit is connected to the outputs of the plurality of converter stages and is configured to provide an output signal based on converter stage output voltages provided at the outputs of the resonant converter stages.

Example 2. The power converter of example 1, wherein the control circuit is configured to: adjust an operating frequency of operating the resonant converter stages, operate each of the plurality of resonant converter stages in a plurality of successive operating cycles at the same operating frequency, and individually adjust a power transfer duty cycle of each of the plurality of resonant converter stages, wherein the power transfer duty cycle of each of the plurality of converter stages is a portion of each operating cycle of the respective converter stage in which power is received by the respective converter stage from the respective input.

Example 3. The power converter of example 2, wherein the control circuit is configured to adjust the operating frequency based on at least one input signal received by one of the resonant converter stages and based on at least one output signal provided by the rectifier circuit.

Example 4. The power converter of example 3, wherein the control circuit being configured to adjust the operating frequency includes that the control circuit is configured to, for each of the resonant converter stages, obtain a desired power transfer duration based on the at least one input signal and based on the at least one output signal, select a maximum desired power transfer duration from the desired power transfer durations obtained for the resonant converter stages, and adjust the operating frequency dependent on the maximum desired power transfer duration.

Example 5. The power converter of example 4, wherein the operating frequency is at least approximately given by the reciprocal of a time duration that includes the maximum desired power transfer duration plus a delay time.

Example 6. The power converter of any one of examples 2 to 5, wherein the control circuit is configured to individually adjust the power transfer duty cycle of each of the plurality of resonant converter stages based on at least one input signal received by the respective resonant converter stage and based on at least one output signal provided by the rectifier circuit.

Example 7. The power converter of any one of examples 3 to 6, wherein the at least one input signal to adjust the operating frequency includes an input voltage and an input current.

Example 8. The power converter of any one of examples 3 to 7, wherein the at least one input signal to adjust the power transfer duty cycle includes an input voltage and an input current.

Example 9. The power converter of example 2, wherein the control circuit is configured to adjust the operating frequency to a predefined fixed frequency value.

Example 10. The power converter of any one of examples 1 to 9, wherein each of the plurality of the resonant converter stages includes: a switching circuit connected to the input of the resonant converter stage; a resonant circuit connected to the switching circuit; and a transformer including a primary winding connected to the resonant circuit and a secondary winding inductively coupled with the primary winding and connected to the output of the resonant converter stage.

Example 11. The power converter of example 10, wherein each transformer includes one secondary winding, and wherein the outputs of the plurality of resonant converter stages being connected in series includes the secondary windings being connected in series.

Example 12. The power converter of example 10, wherein each of the transformers includes a first secondary winding and a second secondary winding that are each coupled with the primary winding, wherein the outputs of the plurality of resonant converter stages being connected in series includes the first secondary windings of the transformers being connected in series to form a first series circuit and the second secondary windings of the transformers being connected in series to form a second series circuit, and wherein the rectifier circuit being connected to the outputs of the resonant converter stages includes the rectifier circuit being connected to each of the first and second series circuits.

Example 13. The power converter of example 2 and any one of examples 10 to 12, wherein the operating frequency of each of the resonant converter stages is the operating frequency of the respective switching circuit.

Example 14. The power converter of any one of examples 10 to 13, wherein the resonant circuit of each of the converter stages includes an LLC circuit with a capacitor, a first inductor, and a second inductor.

Example 15. The power converter of example 14, wherein the second inductor is formed by the primary winding of the transformer connected to the resonant circuit.

Example 16. The power converter of any one of examples 10 to 15, wherein each of the switching circuits includes a bridge circuit with two half-bridges each including two switching elements.

Example 17. The power converter of example 16, wherein each of the switching elements is a bidirectionally blocking switching element.

Example 18. The power converter of any one of examples 10 to 17, wherein the transformers of the plurality of converter stages have the same winding ratio.

Example 19. The power converter of any one of examples 1 to 18, wherein the rectifier circuit includes a rectifier bridge with passive rectifier elements.

Example 20. The power converter of any one of examples 1 to 18, wherein the rectifier circuit includes a rectifier bridge with active rectifier elements and a control circuit configured to control operation of the active rectifier elements.

Example 21. The power converter of any one of the preceding examples, wherein the plurality of resonant converter stages includes exactly three resonant converter stages.

Example 22. A power conversion method using a power converter, wherein the power converter includes: a plurality of resonant converter stages each including an input and an output, wherein the input of each of the plurality of resonant converter stages is configured to receive a respective input voltage and wherein the outputs of the plurality of resonant converter stages are connected in series; and a rectifier circuit connected to a series circuit including the outputs of the plurality of resonant converter stages, and wherein the method includes: adjusting an operating frequency of operating the resonant converter stages; operating each of the plurality of resonant converter stages in a plurality of successive operating cycles at the same adjusted operating frequency; and individually adjusting a power transfer duty cycle of each of the plurality of resonant converter stages, wherein the power transfer duty cycle of each of the plurality of resonant converter stages is a portion of each operating cycle of the respective converter stage in which power is received by the respective converter stage from the respective input.

Example 23. The method of example 22, wherein adjusting the operating frequency includes adjusting the operating frequency based on at least one input signal received by one of the resonant converter stages and based on at least one output signal provided by the rectifier circuit.

Example 24. The method of example 22, wherein adjusting the operating frequency includes adjusting the operating frequency to a predefined fixed frequency value.

Example 25. An executable program code including instructions which, when executed by a control circuit including a microcontroller, to cause the control circuit to carry out the method of any one of examples 22 to 24.


**Claims**

1. A power converter, comprising:

    a plurality of resonant converter stages (1a, 1b, 1c) each comprising an input (Ina, Inb, Inc) and an output (Outa, Outb, Outc);
a rectifier circuit (6); and
a control circuit (7) configured to control operation of the plurality of resonant converter stages (1a, 1b, 1c),
wherein the input (Ina, Inb, Inc) of each of the plurality of converter stages (1a, 1b, 1c) is configured to receive
a respective input voltage (Vina, Vinb, Vinc),
wherein the outputs (Outa, Outb, Outc) of the plurality of resonant converter stages (1a, 1b, 1c) are connected
in series, and
wherein the rectifier circuit (6) is connected to the outputs (Outa, Outb, Outc) of the plurality of converter stages
(1a, 1b, 1c) and is configured to provide an output signal (Vout, Iout) based on converter stage output voltages
(Vseca, Vsecb, Vsecc) provided at the outputs (Outa, Outb, Outc) of the resonant converter stages (1a, 1b, 1c).

2.  The power converter of claim 1, wherein the control circuit (7) is configured to:

    adjust an operating frequency of operating the resonant converter stages (1a, 1b, 1c),
    operate each of the plurality of resonant converter stages in a plurality of successive operating cycles at the
    same operating frequency, and
    individually adjust a power transfer duty cycle of each of the plurality of resonant converter stages (1a, 1b, 1c),
    wherein the power transfer duty cycle of each of the plurality of converter stages (1a, 1b, 1c) is a portion of each
    operating cycle of the respective converter stage (1a, 1b, 1c) in which power is received by the respective
    converter stage (1a, 1b, 1c) from the respective input (Ina, Inb, Inc).

3.  The power converter of claim 2,
    wherein the control circuit (7) is configured to adjust the operating frequency based on at least one input signal
    (Vina, Vinb, Vine, Iina, Iinb, Iinc) received by one of the resonant converter stages (1a, 1b, 1c) and based on at
    least one output signal (Vout, Iout) provided by the rectifier circuit (6).

4.  The power converter of claim 3, wherein the control circuit (7) being configured to adjust the operating frequency
    comprises that the control circuit (7) is configured to,

    for each of the resonant converter stages (1a, 1b, 1c), obtain a desired power transfer duration (Tona*, Tonb*,
    Tonc*) based on the at least one input signal (Vina, Vinb, Vine, Iina, Iinb, Iinc) and based on the at least one
    output signal (Vout, Iout),
    select a maximum desired power transfer duration (Tmax*) from the desired power transfer durations obtained
    for the resonant converter stages (1a, 1b, 1c), and
    adjust the operating frequency dependent on the maximum desired power transfer duration.

5.  The power converter of claim 4, wherein the operating frequency is at least approximately given by the reciprocal
    of a time duration that includes the maximum desired power transfer duration (Tmax*) plus a delay time.

6.  The power converter of any one of claims 2 to 5,
    wherein the control circuit (7) is configured to individually adjust the power transfer duty cycle of each of the plurality
    of resonant converter stages (1a, 1b, 1c) based on at least one input signal (Vina, Vinb, Vine, Iina, Iinb, Iinc) received
    by the respective resonant converter stage (1a, 1b, 1c) and based on at least one output signal (Vout, Iout) provided
    by the rectifier circuit (6).

7.  The power converter of any one of claims 3 to 6,
    wherein the at least one input signal (Vina, Vinb, Vine, Iina, Iinb, Iinc) to adjust the operating frequency comprises
    an input voltage (Vina, Vinb, Vine) and an input current (Iina, Iinb, Iinc).

8.  The power converter of any one of claims 3 to 7,
    wherein the at least one input signal (Vina, Vinb, Vine, Iina, Iinb, Iinc) to adjust the power transfer duty cycle comprises
    an input voltage (Vina, Vinb, Vine) and an input current (Iina, Iinb, Iinc).

9.  The power converter of claim 2,
    wherein the control circuit (7) is configured to adjust the operating frequency to a predefined fixed frequency value.

10. The power converter of any one of the preceding claims,
    wherein each of the plurality of the resonant converter stages (1a, 1b, 1c) comprises:

a switching circuit (2a, 2b, 2c) connected to the input (Ina, Inb, Inc) of the resonant converter stage (1a, 1b, 1c);

a resonant circuit (4a, 4b, 4c) connected to the switching circuit (2b, 2b, 2c); and

a transformer (5a, 5b, 5c) comprising a primary winding (51a, 51b, 51c) connected to the resonant circuit (4a, 4b, 4c) and a secondary winding (52a, 52b, 52c) inductively coupled with the primary winding (51a, 51b, 51c) and connected to the output (Outa, Outb, Outc) of the resonant converter stage (1a, 1b, 1c).

11. The power converter of claim 2 and claim 10,
wherein the operating frequency of each of the resonant converter stages (1a, 1b, 1c) is the operating frequency of the respective switching circuit (2a, 2b, 2c).

12. The power converter of any one of claims 10 to 11,
wherein the resonant circuit (4a, 4b, 4c) of each of the converter stages (1a, 1b, 1c) comprises an LLC circuit with a capacitor (41), a first inductor (42), and a second inductor (43).

13. The power converter of any one of claims 10 to 12,
wherein the transformers (5a, 5b, 5c) of the plurality of converter stages (1a, 1b, 1c) have the same winding ratio.

14. A power conversion method using a power converter,
wherein the power converter comprises:

a plurality of resonant converter stages (1a, 1b, 1c) each comprising an input (Ina, Inb, Inc) and an output (Outa, Outb, Outc), wherein the input (Ina, Inb, Inc) of each of the plurality of resonant converter stages (1a, 1b, 1c) is configured to receive a respective input voltage (Vina, Vinb, Vine) and wherein the outputs (Outa, Outb, Outc) of the plurality of resonant converter stages (1a, 1b, 1c) are connected in series; and

a rectifier circuit (6) connected to a series circuit including the outputs (Outa, Outb, Outc) of the plurality of resonant converter stages (1a, 1b, 1c), and

wherein the method comprises:

adjusting an operating frequency of operating the resonant converter stages (1a, 1b, 1c);

operating each of the plurality of resonant converter stages in a plurality of successive operating cycles at the same adjusted operating frequency; and

individually adjusting a power transfer duty cycle of each of the plurality of resonant converter stages (1a, 1b, 1c),

wherein the power transfer duty cycle of each of the plurality of resonant converter stages (1a, 1b, 1c) is a portion of each operating cycle of the respective converter stage (1a, 1b, 1c) in which power is received by the respective converter stage (1a, 1b, 1c) from the respective input (Ina, Inb, Inc).

15. An executable program code comprising instructions which, when executed by a control circuit comprising a microcontroller, to cause the control circuit to carry out the method of claim 14.

FIG 1

FIG 2

FIG 3

FIG 4

ADJUSTING AN OPERATING FREQUENCY OF
OPERATING THE RESONANT CONVERTER STAGES — 101

OPERATING EACH OF THE PLURALITY OF RESONANT
CONVERTER STAGES IN A PLURALITY OF
SUCCESSIVE OPERATING CYCLES AT THE SAME
ADJUSTED OPERATING FREQUENCY — 102

INDIVIDUALLY ADJUSTING A POWER TRANSFER
DUTY CYCLE OF EACH OF THE PLURALITY OF
RESONANT CONVERTER STAGES — 103

FIG 5

OP1

Ton1

Ton1

OP2

Ton2

Ton2

OP3

Ton3

Ton3

Top=1/fop

Top

FIG 6

FIG 7

FIG 8

FIG 9

**FIG 10**

**FIG 11**

**FIG 12**

**FIG 13**

**FIG 14**

**FIG 15**

FIG 16

FIG 17

FIG 18

FIG 19

73

732      731

K     **PI**    Vout_err    +    Vout'

-

Vout*

**FIG 20**

Iout'

73

K    733        C    732    Vout_err    731

$K=(A \cdot Iout')+C$    **PI**    +    Vout'

-

Vout*

**FIG 21**

73

735      734

K    **PI**    Iout_err    +    Iout'

-

Iout*

**FIG 22**

FIG 23

**FIG 24**

FIG 25

EP 4 462 663 A1

Vin

Iin

Vout

Ton

t

FIG 26

FIG 27

Europäisches
Patentamt

European
Patent Office

Office européen
des brevets

# EUROPEAN SEARCH REPORT

Application Number

EP 23 17 2393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/043837 A2 (EATON POWER QUALITY LTD [NZ]; HARRISON MICHAEL JOHN [NZ]) 27 April 2006 (2006-04-27) | 1,10,11, 13,15 | INV. H02M1/42 |
| Y | * page 7, lines 5-11; figure 16 * | 2,3,6-9, 12,14 | |
| A | ----- | 4,5 | |
| Y | CN 115 313 684 A (UNIV HUAZHONG SCIENCE TECH) 8 November 2022 (2022-11-08) * abstract; figures 1,5,6 * ----- | 2,3,6-9, 12 | |
| Y | US 2020/235656 A1 (FOROUZESH MOJTABA [CA] ET AL) 23 July 2020 (2020-07-23) * paragraph [0034] - paragraph [0035]; figure 4a * ----- | 14 | |
| Y | US 5 731 969 A (SMALL KENNETH T [US]) 24 March 1998 (1998-03-24) * column 5, lines 4-25; figures 4,10 * ----- | 14 | |

| | TECHNICAL FIELDS SEARCHED (IPC) |
|---|---|
| | H02M |

The present search report has been drawn up for all claims

| Place of search | Date of completion of the search | Examiner |
|---|---|---|
| The Hague | 9 October 2023 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 2393

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2023

| Patent document cited in search report | | Publication date | Patent family member(s) | Publication date |
|---|---|---|---|---|
| WO 2006043837 | A2 | 27-04-2006 | NONE | |
| CN 115313684 | A | 08-11-2022 | NONE | |
| US 2020235656 | A1 | 23-07-2020 | NONE | |
| US 5731969 | A | 24-03-1998 | NONE | |

EPO FORM P0459

For more details about this annex : see Official Journal of the European Patent Office, No. 12/82